# EUROPEAN PATENT SPECIFICATION

(11) **EP 2 991 079 B1**
(45) Date of publication and mention of the grant of the patent: **04.10.2017**
(21) Application number: 14196871.9
(22) Date of filing: 09.12.2014
(51) Int. Cl.: H01B 1/22

(54) **Electrically conductive composition**
Elektrisch leitfähige Zusammensetzung
Composition électriquement conductrice

(30) Priority: 29.08.2014 EP 14182791
(43) Date of publication of application: 02.03.2016
(73) Proprietor: Heraeus Deutschland GmbH & Co. KG, 63450 Hanau (DE)
(72) Inventor: Dickel, Tanja, 63543 Neuberg (DE); Fritzsche, Sebastian, 63454 Hanau (DE); Hanselmann, Daniel, 63751 Gelnhausen (DE); Stenger, Katja, 63831 Wiesen (DE)
(74) Representative: Heraeus IP

(56) References cited:
- EP-A1- 0 653 763
- EP-A1- 1 975 948
- US-A- 5 057 245
- US-A1- 2010 209 690

## Description

The present invention relates to an electrically conductive composition which can be used as an electrically conductive adhesive composition, in particular in electronics and microelectronics applications.

Electronic devices require electrically conductive connections to active and passive components.

Electrically conductive adhesives are used in a variety of applications to attach bare dies and other electronic components to a substrate, for example lead frames, printed circuit boards, flexible electronics, ceramic substrates (e.g. LTCC) or DCBs and the like. Such devices are used for example in communication (e.g. mobile phones, tablets and computers), power conversion (e.g. power electronic modules) or the like. There are numerous requirements for a conductive adhesive to meet in these applications. Besides high mechanical stability (adhesive power expressed as shear strength) and high electrical and thermal conductivity and compatibility with a wide range of substrates are required.

An ideal CTE (coefficient of thermal expansion) of an electrically conductive adhesive is one representing a compromise between different CTEs of parts to be adhesively bonded to each other. Such compromise CTE is a key factor for the stability of an adhesive bond.

Besides a fitting CTE, good thermal and electrical conductivity are also of notable importance in common applications.

There is a desire to provide an electrically conductive adhesive composition improved in CTE in terms of a best possible match of the CTEs of parts to be adhesively bonded to each other.

The invention relates to an electrically conductive composition comprising
(A) 2 to 35 vol.-% (volume-%) of electrically conductive particles having an average particle size in the range of 1 to 25 µm and exhibiting an aspect ratio in the range of 5 to 30 : 1,
(B) 10 to 70 vol.-% of non-metallic particles having an average particle size in the range of 1 to 25 µm, exhibiting an aspect ratio in the range of 1 to 3 : 1,
(C) 30 to 80 vol.-% of a curable (hardenable, crosslinkable) resin system, and
(D) 0 to 10 vol.-% of at least one additive,
wherein the sum of the vol.-% of particles (A) and (B) totals 25 to 65 vol.-%. In an embodiment, the sum of the vol.-% of (A), (B), (C) and, if present, (D) may total 100 vol.-% of the electrically conductive composition.

The vol.-% disclosed in the description and the claims refer to the electrically conductive composition of the invention, i.e. not yet cured, or, to be even more precise, to the electrically conductive composition prior to its use or application.

In the description and the claims the term "average particle size" is used. It shall mean the average primary particle size (mean particle diameter, d₅₀) determined by means of laser diffraction. Laser diffraction measurements can be carried out making use of a particle size analyzer, for example, a Mastersizer 3000 from Malvern Instruments.

In the description and the claims the term "aspect ratio" is used with regard to the shape of the particles (A) and (B) included in the electrically conductive composition of the invention. The aspect ratio means the ratio of the largest dimension to the smallest dimension of a particle and it is determined by SEM (scanning electron microscopy) and evaluating the electron microscopical images by measuring the dimensions of a statistically meaningful number of individual particles.

The electrically conductive composition of the invention comprises 2 to 35 vol.-%, preferably 2 to 30 vol.-% and most preferably 2 to 20 vol.-% of electrically conductive particles (A) having an average particle size in the range of 1 to 25 µm, preferably 1 to 20 µm, most preferably 1 to 15 µm and exhibiting an aspect ratio in the range of 5 to 30 : 1, preferably 6 to 20 : 1, most preferably 7 to 15 : 1.

A first group of electrically conductive particles (A) includes particles of a metal (alloy). The term "particles of a metal (alloy)" used herein shall mean particles of pure metal (purity of ≥ 99 weight-%) and/or of metal alloy. The metal or metal alloy has an electrical conductivity of, for example, > 10⁷ S/m. Examples of useful metal (alloy) particles include silver (alloy) particles, gold (alloy) particles, aluminum (alloy) particles and copper (alloy) particles.

A second group of electrically conductive particles (A) includes particles which are coated with a metal, in particular with a metal having an electrical conductivity > 10⁷ S/m. Examples include metal coated metal particles, e.g. silver coated copper particles and metal coated glass particles, e.g. silver coated glass particles.

The particles (A) exhibit an aspect ratio in the range of 5 to 30 : 1, preferably 6 to 20 : 1, most preferably 7 to 15 : 1. Said aspect ratio shall express that the particles (A) are, for example, acicular particles (needles) or flakes (platelets) as opposed to, for example, particles having a spherical, an essentially spherical, an elliptical or an ovoid shape.

The electrically conductive composition of the invention may comprise one type of particles (A) or a combination of two or more different types of particles (A). For example, the electrically conductive composition of the invention may comprise one type of metal (alloy) particles (A) or a combination of different types of metal (alloy) particles (A). In any case, all types of particles (A) contained in the electrically conductive composition of the invention meet the afore mentioned average particle size and aspect ratio conditions. To illustrate this, the following theoretical example may be envisaged: An electrically conductive composition of the invention may comprise two different types of silver particles as the only particles (A), namely X vol.-% of silver particles having a d50 value of x µm and an aspect ratio of y : 1, and Y vol.-% of silver particles having a d50 value of v µm and an aspect ratio of w : 1, with X+Y lying in said 2 to 35 vol.-% range, x and v independently lying in said 1 to 25 µm range and y and w independently lying in said 5 to 30 : 1 range.

Particles of type (A) are commercially available. Examples of such particles include NZS-610, SF-3, SF-3J from Ames Goldsmith; TSC-10F20A, TSC-10F20B, TSC-10F20C from Chang Sung; Silver Flake #80 from Ferro; RA-0101, AA-192N from Metalor.

In an embodiment, the electrically conductive composition of the invention may comprise a portion, for example, 10 to 30 vol.-% of metal particles other than those of type (A), in particular, metal particles having an aspect ratio in the range of, for example, 1 to < 5 : 1 or 1 to 3 : 1. One commercially available example of such metal particles is FA-3162 from Metalor.

The electrically conductive composition of the invention comprises 10 to 70 vol.-%, preferably 10 to 63 vol.-% and most preferably 15 to 60 vol.-% of non-metallic particles (B) having an average particle size in the range of 1 to 25 µm, preferably 1 to 20 µm, most preferably 1 to 15 µm and exhibiting an aspect ratio in the range of 1 to 3 : 1, preferably 1 to 2 : 1, most preferably 1 to 1.5 : 1. Examples of useful particles of the (B) type include graphite particles and electrically non-conductive non-metallic particles, in each case meeting said average particle size and aspect ratio conditions. The term "electrically non-conductive non-metallic particles" used herein shall mean non-metallic particles of a material having an electrical conductivity of < 10⁻⁵ S/m. Examples of such materials include glass, ceramics, plastics, diamond, boron nitride, silicon dioxide, silicon nitride, silicon carbide, aluminosilicate, aluminum oxide, aluminum nitride, zirconium oxide andtitanium dioxide.

The non-metallic particles (B) exhibit an aspect ratio in the range of 1 to 3 : 1, preferably 1 to 2 : 1, most preferably 1 to 1.5 : 1. Said aspect ratio shall express that the particles (B) have a true spherical or essentially spherical shape as opposed to particles like, for example, acicular particles or flakes. The individual particles (B) when looked at under an electron microscope have a ball like or near-to-ball like shape, i.e., they may be perfectly round or almost round, elliptical or they may have an ovoid shape.

The electrically conductive composition of the invention may comprise one type of particles (B) or a combination of two or more different types of particles (B). In any case, all types of particles (B) contained in the electrically conductive composition of the invention meet the afore mentioned average particle size and aspect ratio conditions.

Particles of type (B) are commercially available. Examples include AE9104 from Admatechs; EDM99,5 from AMG Mining; CL4400, CL3000SG from Almatis; Glass Spheres from Sigma Aldrich; Spheromers® CA6, CA10, CA15 from Microbeads®. In a preferred embodiment, the particles (A) have an average particle size in the range of 0.2 to 2 times the average particle size of the non-metallic particles (B).

The sum of the vol.-% of particles (A) and (B) totals 25 to 65 vol.-%.

The electrically conductive composition of the invention comprises 30 to 80 vol.-%, preferably 30 to 75 vol.-% and most preferably 30 to 70 vol.-% of a curable resin system (C).

The curable resin system (C) comprises those constituents of the electrically conductive composition of the invention which after the application and curing thereof form a covalently crosslinked polymer matrix in which the (A) and (B) particles are embedded.

Curable resin system means a resin system comprising at least one self-crosslinkable resin, typically, in combination with a starter or initiator, and/or one or more crosslinkable resins in combination with one or more hardeners (crosslinkers, curing agents) for the one or more crosslinkable resins. However, the presence of non-reactive resins within such curable resin system is also possible. To avoid misunderstandings, the term "resin system", although generally understood as referring to polymeric materials, shall not be understood as excluding the optional presence of oligomeric materials. Oligomeric materials may include reactive thinners (reactive diluents). The border between oligomeric and polymeric materials is defined by the weight average molar mass determined by gel permeation chromatography (GPC; divinylbenzene-crosslinked polystyrene as the immobile phase, tetrahydrofuran as the liquid phase, polystyrene standards). Oligomeric materials have a weight average molar mass of ≤ 500, while the weight average molar mass of polymeric materials is > 500.

Typically, the constituents of the curable resin system (C) are non-volatile; however, volatile compounds which can be involved in the curing mechanism of the curable resin system may also be present.

The curable resin system (C) is curable by formation of covalent bonds. Covalent bond forming curing reactions may be free-radical polymerization, condensation and/or addition reactions, wherein condensation reactions are less preferred.

As has already been mentioned before, the curable resin system (C) comprises those constituents of the electrically conductive composition of the invention which after the application and curing thereof form a covalently crosslinked polymer matrix or polymer network. This polymer matrix may be of any type, i.e. it may comprise one or more polymers or one or more hybrids of two or more different polymers. Examples of possible polymers may include (meth)acryl copolymers, polyesters, polyurethanes, polysiloxanes, polyethers, epoxy-amine-polyadducts and any combinations. The polymers forming said polymer matrix can stem from polymeric components of the curable resin system (C) and/or can be formed during polymer forming curing reactions of the curable resin system (C) after application and during curing of the electrically conductive composition of the invention.

Hence, the one or more resins which may be constituents of the curable resin system (C) may be selected from, for example, (meth)acryl copolymer resins, polyester resins, polyurethane resins, polysiloxane resins, polyether resins including epoxy resin type polyether resins, epoxy-amine-polyadducts and hybrids thereof.

Self-crosslinkable resins of the curable resin system (C) may be resins carrying functional groups capable of reacting among themselves under formation of covalent bonds in the sense of crosslinked network formation. In the alternative, self-crosslinkable resins are resins carrying different functional groups (F1) and (F2) in one and the same molecule, wherein the functional groups (F2) exhibit a reactive functionality complementary to the functionality of the functional groups (F1). The combination of a crosslinkable resin with a hardener means that the crosslinkable resin carries functional groups (F1), while the hardener carries other functional groups (F2) exhibiting a reactive functionality complementary to the functionality of the functional groups (F1). Examples of such complementary functionalities (F1)/(F2) are: carboxyl/epoxy, hydroxyl/isocyanate, epoxy/amine, free-radically polymerizable olefinic double bond/free-radically polymerizable olefinic double bond and the like. The reaction of the complementary functionalities (F1)/(F2) leads in any case to the formation of covalent bonds with the result of formation of a covalently crosslinked polymer network.

In a preferred embodiment, the curable resin system (C) comprises a self-crosslinkable epoxy resin or a system of epoxy resin and hardener for the epoxy resin selected among polyamine hardeners, polycarboxylic acid hardeners and polycarboxylic acid anhydride hardeners. The system of epoxy resin and polyamine hardener for the epoxy resin may optionally comprise lactone.

A curable resin system (C) comprising a self-crosslinkable epoxy resin may comprise a starter or an initiator. It may be a cationic curable system. To initiate cationic cure it requires a cationic initiator, which may be thermo- or UV-labile. Hence a cationically curable resin system (C) comprising a self-crosslinkable epoxy resin may be a thermally curable or a UV-curable resin system.

Examples of useful epoxy resins are bisphenol A and/or bisphenol F epoxy resins, novolac epoxy resins, aliphatic epoxy resins and cycloaliphatic epoxy resins. Examples of such commercially available epoxy resins include Araldite® GY 279, Araldite® GY 891, Araldite® PY 302-2, Araldite® PY 3483, Araldite® GY 281 and Quatrex® 1010 from Huntsman; D.E.R.™ 331, D.E.R.™ 732, D.E.R.™ 354 and D.E.N™ 431 from Dow Chemical; JER YX8000 from Mitsubishi Chemical; and EPONEX™ Resin 1510 from Momentive Specialty Chemicals.

Examples of useful polyamine hardeners for compounds are comprising more than one primary or secondary amino group per molecule. Typical examples are diamines, triamines and other polyamines with at least two amino groups in the molecule, wherein the amino groups are selected among primary and secondary amino groups. Secondary amino groups can be present as lateral or terminal functional groups or as member of a heterocyclic ring. Examples of preferred polyamine hardeners include diethylenetriamine, ethylenediamine, triethylenetetramine, aminoethylpiperazine and Jeffamine® D230 from Huntsman.

Examples of useful polycarboxylic acid hardeners include methylhexahydrophthalic acid and their possible anhydrides.

Examples of useful lactones are delta-valerolactone, delta-hexalactone, delta-nonalactone, delta- decalactone, delta-undecalactone, gamma-butyrolactone, gamma-hexalactone, gamma-heptalactone, gamma-octalactone, epsilon-caprolactone, epsilon-octalactone, epsilon-nonalactone and mixtures thereof.

The electrically conductive composition of the invention comprises 0 to 10 vol.-% of at least one additive (D).

Examples of additives include 4-cyclohexanedimethanol divinylether, organic solvents, for example, isopropanol, terpineol, wetting agents, for example, oleic acid, rheological modifiers, for example, nanosized silica, ethylcellulose.

The sum of the vol.-% of (A), (B), (C) and, if present, (D) may total 100 vol.-% of the electrically conductive composition.

In a preferred embodiment, the electrically conductive composition comprises or consists of
(A) 2 to 35 vol.-% of the electrically conductive particles having an average particle size in the range of 1 to 25 µm and exhibiting an aspect ratio in the range of 5 to 30 : 1,
(B) 10 to 63 vol.-% of the non-metallic particles having an average particle size in the range of 1 to 25 µm, exhibiting an aspect ratio in the range of 1 to 3 : 1,
(C) 30 to 80 vol.-% of the curable resin system, and
(D) 0 to 10 vol.-% of the at least one additive,
wherein the sum of the vol.-% of particles (A) and (B) totals 25 to 65 vol.-%.

In another preferred embodiment, the electrically conductive composition comprises or consists of
(A) 2 to 35 vol.-% of the electrically conductive particles having an average particle size in the range of 1 to 25 µm and exhibiting an aspect ratio in the range of 5 to 30 : 1,
(B) 15 to 60 vol.-% of the non-metallic particles having an average particle size in the range of 1 to 25 µm, exhibiting an aspect ratio in the range of 1 to 3 : 1,
(C) 30 to 80 vol.-% of the curable resin system, and
(D) 0 to 10 vol.-% of the at least one additive,
wherein the sum of the vol.-% of particles (A) and (B) totals 25 to 65 vol.-%.

So far the composition of the electrically conductive composition of the invention has been looked at vol.-%-wise. In an embodiment, the electrically conductive composition of the invention comprises 15 to 60 wt.-% (weight-%) of the electrically conductive particles (A), 10 to 75 wt.-% of the particles (B), 7 to 35 wt.-% of the curable resin system (C), and (D) 0 to 5 wt.-% of the at least one additive, wherein the sum of the wt.-% of particles (A) and (B) totals 60 to 93 wt.-% and wherein the sum of the wt.-% of (A), (B), (C) and, if present, (D) may total 100 wt.-% of the electrically conductive composition. The wt.-% disclosed in the description and the claims refer to the electrically conductive composition of the invention, i.e. not yet cured, or to be even more precise, to the electrically conductive composition prior to its use or application.

Preferably, the viscosity of the electrically conductive composition of the invention is in the range of 4 to 45 mPa·s, most preferably 8 to 35 mPa·s, measured in accordance with DIN 53018 (at 23 °C, CSR-measurement, cone-plate system, shear rate of 50 rounds per second).

The electrically conductive composition of the invention can be made by mixing components (A), (B), (C) and (D), wherein it is preferred to introduce component (C) first before adding components (A and (B). After completion of the mixing the so-produced electrically conductive composition of the invention can be stored until its use or application. It may be advantageous to store the electrically conductive composition of the invention at low temperatures of, for example, -78 to +8 °C.

Dependent on the chemical nature of the (C) component and if desired or expedient, it is also possible to split component (C) into sub-components, for example, into a curable resin sub-component (C1) and a hardener sub-component (C2) and to mix (A), (B), (C1) and (D) and store that mixture separately from (C2). In so doing a two-component type of electrically conductive composition of the invention is obtained. Its two components are stored separately from each other until use or application of the electrically conductive composition of the invention. The two components are then mixed shortly or immediately before the application.

The electrically conductive composition of the invention can be used as an electrically conductive adhesive composition, in particular in electronics and microelectronics applications. To this end the electrically conductive composition of the invention is applied to the contact surface of a part to be adhesively bonded to another. Examples of such parts are diodes, LEDs (light emitting diodes), MIDs (molded interconnect devices), dies, IGBTs (insulated gate bipolar transistors, ICs (integrated circuits), sensors, connecting elements (e.g. clips), heat sinks, resistors, capacitors, inductors, antennae on the one hand and, on the other hand, substrates like DCB (direct copper bonded), IMS (insulated metal substrate), ceramics, plastics, composite materials like FR-4 glass epoxy, silicon, and metals in general. Application of the electrically conductive composition of the invention may be performed, for example, by printing, e.g. screen printing or stencil printing, by jetting or by dispensing. The typical thickness of the applied and uncured electrically conductive composition of the invention lies in the range of, for example, 5 to 50 µm.

After the application a drying step may be performed in order to remove eventually present volatile compounds like, for example, organic solvent. If such drying step is performed the drying parameters are for example, 1 to 120 minutes at an object temperature of, for example, 60 to 160 °C.

After the application and the optional drying the other part to be adhesively bonded is put with its contact surface onto the layer of electrically conductive adhesive. The so formed assembly consisting of said parts with the layer of the electrically conductive composition in between is then cured. Curing may be initiated by UV irradiation if at least one of the parts to be adhesively bonded is transparent for UV light and if the curing chemistry of the (C) system allows for an UV curing. Examples of UV-curable (C) systems are the already mentioned curable resin system (C) comprising a self-crosslinkable epoxy resin and a UV-Iabile cationic initiator or a curable resin system (C) comprising free-radically polymerizable components and a UV-Iabile free-radical initiator. In the more common alternative of thermal curing heat is applied and the electrically conductive composition or the assembly is heated, for example, for 5 to 30 minutes at an object temperature of, for example, 80 to 160 °C.

In the hardened state the electrically conductive composition of the invention is solid with a specific weight in the range of, for example 1.5 to 4 g/cm³. The specific weight of the cured electrically conductive composition of the invention is, for example, 12 to 30 % less than that of a comparable electrically conductive composition not comprising the (A)/(B) particles' combination but instead metal particles only.

In the range of -50 to 200 °C the hardened electrically conductive composition of the invention exhibits CTE values in the range of, for example, 40 to 200 ppm/K. CTE values can be measured by dilatometric determination as is known to the person skilled in the art.

At 25 °C the hardened electrically conductive composition of the invention exhibits a sheet resistivity of, for example, > 0 to ≤ 5 mΩ·cm.

The shear strength of the hardened electrically conductive composition of the invention, measured at 20 °C according to DIN EN 1465 lies, for example, in the range of > 7.5 to 20 MPa. Customer requirements are met if the shear strength lies above 7 MPa.

A further embodiment of the invention is a hardened composition obtainable by hardening the hardenable electrically conductive composition of the present invention. Therefore, also an assembly, wherein the electrically conductive composition of the present invention is in a hardened state is part of the invention. In other words, a further embodiment of the invention is an assembly comprising a substrate, the hardened electrically conductive composition of the invention and an electronic component. The hardened electrically conductive composition of the invention serves as an electrically conductive adhesive and is therefore located between the substrate and the electronic component.

A further embodiment of the invention is the use of the electrically conductive composition of the invention as a hardenable electrically conductive adhesive, in particular in electronics and microelectronics applications.

The invention does not only satisfy the demand for CTE match but at the same time helps to save weight and money. While said weight savings are in particular relevant in an aviation and aerospace context, but also generally in a transportation context, the financial savings result from less noble metal particles in the electrically conductive composition of the invention compared to conventional electrically conductive adhesive compositions containing noble metal particles. It goes without saying that the electrically conductive composition of the invention shows said advantages without sacrificing fundamental properties like shear strength and electrical and thermal conductivity.

The embodiments and advantages of the invention are further explained by the following non-limiting examples.

### Examples

### 1. Test Methods

### 1.1. Sheet resistivity (mOhm·cm)

The electrical resistivity was measured at 25 °C according to the four point probe measurement (F.M.Smits, "Measurement of Sheet Resistivities with the Four-Point Probe", published in THE BELL SYSTEM TECHNICAL JOURNAL, MAY 1958, pages 711-718, or the web-site: "http://en.wikipedia.org/wiki/Sheet_resistance")

### 1.2. Density

The density of the uncured electrically conductive composition was measured at 25 °C using a pycnometer.

### 1.3. Shear strength

The shear strength was measured according to DIN EN 1465.

### 2. Preparation and application of electrically conductive compositions, general procedure:

A mixture of components of type (C) and (D) was made by mixing 63 pbw (parts by weight) of Araldite® PY 302-2 (epoxy resin) from Huntsman, 8 pbw of Curezol® C2E4MZ (hardener) from Shikoku, 23 pbw Araldite® DY-E (reactive diluent) from Huntsman, 4 pbw of 4-cyclohexanedimethanol divinylether and 2 pbw of oleic acid. The compositions E1 - E5 were prepared by mixing the components according to table 1 below. Mixing was performed by introducing the mixture of components (C) and (D) into a beaker and then mixing with the further components by means of a spatula, followed by mixing with a paddle mixer at 300 to 400 U/min for 5 min. Thereafter, the mixtures were milled twice in a triple roll mill at 21 °C, followed by evacuation at less than 10 mbar under stirring with a paddle mixer for 20 min. The so produced mixtures were screen printed in 100 µm layer thickness on alumina ceramic substrates and then hardened in a box oven with gas circulation for 30 minutes at an object temperature of 150 °C.

Table 1 shows proportions in vol.-% and wt.-% and test results for an example according to the invention (E4) as well as comparative examples (E1 - E3, E5).

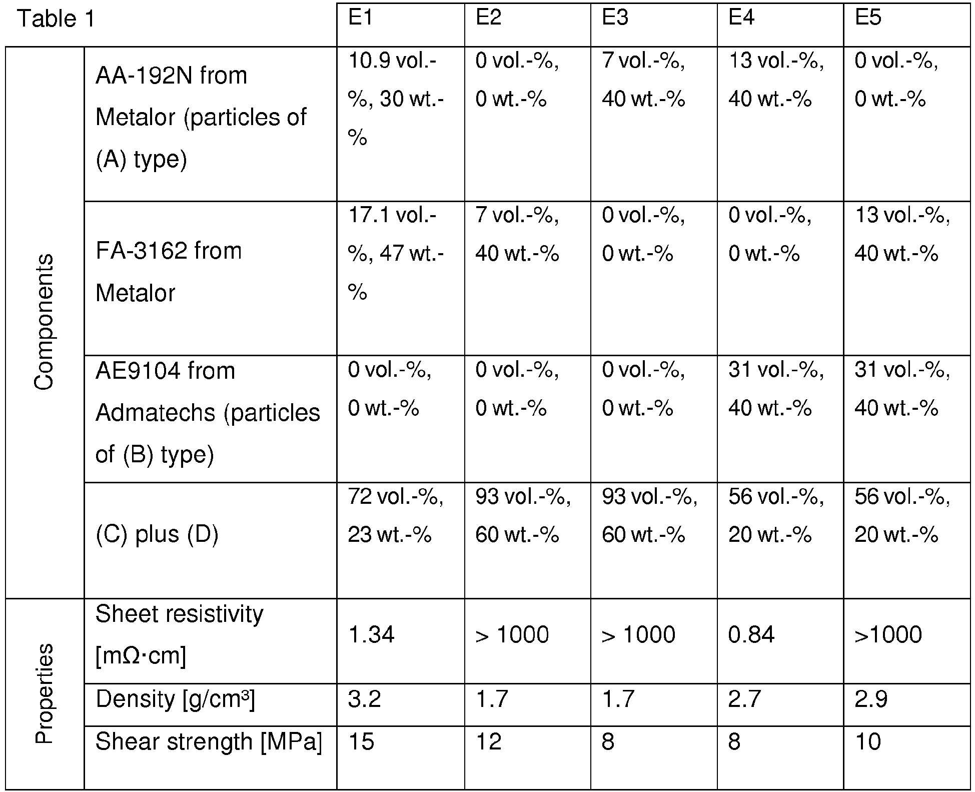

## Claims

1. A process for the manufacture of an assembly comprising (i) a substrate selected from the group consisting of DCB, IMS, ceramics, plastics, composite materials, and metals in general, (ii) a hardened electrically conductive composition, and (iii) an electronic component selected from the group consisting of diodes, LEDs, MIDs, dies, IGBTs, ICs, sensors, connecting elements, heat sinks, resistors, capacitors, inductors, and antennae,
wherein the hardened electrically conductive composition serves as an electrically conductive adhesive and is therefore located between the substrate and the electronic component,
wherein the electrically conductive composition is applied to the contact surface of a part to be adhesively bonded to another,
wherein the other part to be adhesively bonded is put with its contact surface onto the layer of electrically conductive adhesive,
wherein the so formed assembly consisting of said parts with the layer of the electrically conductive composition in between is then cured,
wherein the electrically conductive composition comprises
(A) 2 to 35 vol.-% of electrically conductive particles having an average particle size in the range of 1 to 25 µm and exhibiting an aspect ratio in the range of 5 to 30 : 1,
(B) 10 to 70 vol.-%, preferably 10 to 63 vol.-% of non-metallic particles having an average particle size in the range of 1 to 25 µm, exhibiting an aspect ratio in the range of 1 to 3 : 1,
(C) 30 to 80 vol.-% of a curable resin system, and
(D) 0 to 10 vol.-% of at least one additive,
wherein the sum of the vol.-% of particles (A) and (B) totals 25 to 65 vol.-%.

2. The process of claim 1, wherein the electrically conductive composition consists of 2 to 35 vol.-% of the electrically conductive particles (A), 10 to 70 vol.-%, preferably 10 to 63 vol.-% of the non-metallic particles (B), 30 to 80 vol.-% of the curable resin system (C) and 0 to 10 vol.-% of the least one additive (D).

3. The process of claim 1, wherein the electrically conductive composition comprises 15 to 60 wt.-% of the electrically conductive particles (A), 10 to 75 wt.-% of the non-metallic particles (B), 7 to 35 wt.-% of the curable resin system (C), and 0 to 5 wt.-% of the at least one additive (D), wherein the sum of the wt.-% of particles (A) and (B) totals 60 to 93 wt.-%.

4. The process of claim 3, wherein the electrically conductive composition consists of 15 to 60 wt.-% of the electrically conductive particles (A), 10 to 75 wt.-% of the non-metallic particles (B), 7 to 35 wt.-% of the curable resin system (C), and 0 to 5 wt.-% of the at least one additive (D).

5. The process of any one of the preceding claims, wherein the electrically conductive particles (A) are metal particles and/or metal alloy particles, wherein the metal has an electrical conductivity of > 10⁷ S/m.

6. The process of any one of the preceding claims,
wherein the non-metallic particles (B) are graphite particles and/or electrically non-conductive non-metallic particles of a material which has an electrical conductivity of < 10⁻⁵ S/m.

7. The process of any one of the preceding claims,
wherein the particles (A) have an average particle size in the range of 0.2 to 2 times the average particle size of the particles (B).

8. The process of any one of the preceding claims,
wherein the curable resin system (C) comprises those constituents of the electrically conductive composition which after the application and curing thereof form a covalently crosslinked polymer matrix in which the (A) and (B) particles are embedded.

9. The process of any one of the preceding claims,
wherein the curable resin system (C) comprises self-crosslinkable epoxy resin or a system of epoxy resin and hardener for the epoxy resin selected among polyamine hardeners, polycarboxylic acid hardeners and polycarboxylic acid anhydride hardeners.

10. The process of claim 9,
wherein the curable resin system (C) comprises a system of epoxy resin, polyamine hardener for the epoxy resin and, optionally, lactone.

11. The process of any one of the preceding claims, wherein the electrically conductive composition has a viscosity in the range of 4 to 45 mPa·s, measured in accordance with DIN 53018 (at 23 °C, CSR-measurement, cone-plate system, shear rate of 50 rounds per second).

12. The process of any one of the preceding claims, wherein the hardened electrically conductive composition is a solid with a specific weight in the range of 1.5 to 4 g/cm³.

13. The process of any one of the preceding claims, wherein the hardened electrically conductive composition exhibits a sheet resistivity of > 0 to ≤ 5 mΩ·cm, measured at 25 °C.

14. The process of any one of the preceding claims, wherein the shear strength of the hardened electrically conductive composition measured at 20 °C according to DIN EN 1465 lies in the range of > 7.5 to 20 MPa.

15. An assembly made by the process of any one of the preceding claims.

## Patentansprüche

1. Verfahren zur Herstellung einer Baugruppe, umfassend (i) ein Substrat, das aus der Gruppe bestehend aus DCB, IMS, Keramik, Kunststoffen, Verbundwerkstoffen und Metallen im Allgemeinen ausgewählt wird, (ii) eine gehärtete, elektrisch leitfähige Zusammensetzung, und (iii) eine elektronische Komponente, die aus der Gruppe bestehend aus Dioden, LEDs, MIDs, Matrizen, IGBTs, ICs, Sensoren, verbindenden Elementen, Kühlkörpern, Widerständen, Kondensatoren, Induktoren und Antennen ausgewählt wird, wobei die gehärtete, elektrisch leitfähige Zusammensetzung als ein elektrisch leitfähiger Klebstoff dient und daher zwischen dem Substrat und der elektronischen Komponente positioniert ist,
wobei die elektrisch leitfähige Zusammensetzung auf die Kontaktfläche eines Teils aufgetragen wird, das mit einem anderen mit Klebstoff zu verbinden ist, wobei das andere, mit Klebstoff zu verbindende Teil mit seiner Kontaktfläche auf der Schicht von elektrisch leitfähigem Klebstoff positioniert wird,
wobei die so ausgebildete, aus den Teilen bestehende Baugruppe mit der Schicht der elektrisch leitfähigen Zusammensetzung dazwischen dann ausgehärtet wird,
wobei die elektrisch leitfähige Zusammensetzung umfasst
(A) 2 bis 35 Volumenprozent von elektrisch leitfähigen Partikeln, die eine durchschnittliche Partikelgröße im Bereich von 1 bis 25 µm aufweisen und ein Seitenverhältnis im Bereich von 5 bis 30:1 an den Tag legen,
(B) 10 bis 70 Volumenprozent, vorzugsweise 10 bis 63 Volumenprozent von nichtmetallischen Partikeln, die eine durchschnittliche Partikelgröße im Bereich von 1 bis 25 µm aufweisen, die ein Seitenverhältnis im Bereich von 1 bis 3:1 an den Tag legen,
(C) 30 bis 80 Volumenprozent eines aushärtbaren Harzsystems, und
(D) 0 bis 10 Volumenprozent von mindestens einem Additiv,
wobei die Summe der Volumenprozente von den Partikeln (A) und (B) insgesamt 25 bis 65 Volumenprozent beträgt.

2. Verfahren nach Anspruch 1, wobei die elektrisch leitfähige Zusammensetzung aus 2 bis 35 Volumenprozent der elektrisch leitfähigen Partikel (A), 10 bis 70 Volumenprozent, vorzugsweise 10 bis 63 Volumenprozent der nichtmetallischen Partikel (B), 30 bis 80 Volumenprozent des aushärtbaren Harzsystems (C) und 0 bis 10 Volumenprozent des mindestens einen Additivs (D) besteht.

3. Verfahren nach Anspruch 1, wobei die elektrisch leitfähige Zusammensetzung 15 bis 60 Gewichts-% der elektrisch leitfähigen Partikel (A), 10 bis 75 Gewichts-% der nichtmetallischen Partikel (B) und 7 bis 35 Gewichts-% des aushärtbaren Harzsystems (C) und 0 bis 5 Gewichts-% des mindestens einen Additivs (D) umfasst, wobei die Summe der Gewichts-% der Partikel (A) und (B) insgesamt 60 bis 93 Gewichts-% beträgt.

4. Verfahren nach Anspruch 3, wobei die elektrisch leitfähige Zusammensetzung aus 15 bis 60 Gewichts-% der elektrisch leitfähigen Partikel (A), 10 bis 75 Gewichts-% der nichtmetallischen Partikel (B), 7 bis 35 Gewichts-% des aushärtbaren Harzsystems (C) und 0 bis 5 Gewichts-% des mindestens einen Additivs (D) besteht.

5. Verfahren nach einem der vorangegangenen Ansprüche, wobei die elektrisch leitfähigen Partikel (A) Metallpartikel und/oder Metalllegierungspartikel sind, wobei das Metall eine elektrische Leitfähigkeit von > 10⁷S/m aufweist.

6. Verfahren nach einem der vorangegangenen Ansprüche,
wobei die nichtmetallischen Partikel (B) Grafitteilchen und/oder nicht elektrisch leitfähige nichtmetallische Partikel aus einem Material sind, das eine elektrische Leitfähigkeit von < 10⁻⁵S/m aufweist.

7. Verfahren nach einem der vorangegangenen Ansprüche,
wobei die Partikel (A) eine durchschnittliche Partikelgröße im Bereich von 0,2 bis 2 Mal der durchschnittlichen Partikelgröße der Partikel (B) aufweisen.

8. Verfahren nach einem der vorangegangenen Ansprüche,
wobei das aushärtbare Harzsystem (C) jene Bestandteile der elektrisch leitfähigen Zusammensetzung umfasst, die nach dem Auftragen und deren Aushärtung eine kovalent vernetzte Polymermatrix ausbilden, in der die Partikel (A) und (B) eingebettet sind.

9. Verfahren nach einem der vorangegangenen Ansprüche,
wobei das aushärtbare Harzsystem (C) selbstvernetzbares Epoxidharz oder ein System von Epoxidharz und Härter für Epoxidharz umfasst, der aus Polyaminhärtern, Polycarbonsäurehärtern und Polycarbonsäureanhydridhärtern ausgewählt wird.

10. Verfahren nach Anspruch 9,
wobei das aushärtbare Harzsystem (C) ein System von Epoxidharzen, Polyaminhärter für Epoxidharz und optional Lacton umfasst.

11. Verfahren nach einem der vorangegangenen Ansprüche, wobei die elektrisch leitfähige Zusammensetzung eine Viskosität im Bereich von 4 bis 45 mPa·s aufweist, gemessen gemäß DIN 53018 (bei 23 °C, CSR-Messung, Kegelplattensystem, Scherrate von 50 Schüssen pro Sekunde).

12. Verfahren nach einem der vorangegangenen Ansprüche, wobei die gehärtete, elektrisch leitfähige Zusammensetzung ein Feststoff mit einem spezifischen Gewicht im Bereich von 1,5 bis 4 g/cm³ ist.

13. Verfahren nach einem der vorangegangenen Ansprüche, wobei die gehärtete, elektrisch leitfähige Zusammensetzung einen Schichtwiderstand von > 0 bis ≤ 5 mΩ·cm, gemessen bei 25 °C, aufweist.

14. Verfahren nach einem der vorangegangenen Ansprüche, wobei die Scherfestigkeit der gehärteten, elektrisch leitfähigen Zusammensetzung, gemessen bei 20 °C gemäß DIN EN 1465, im Bereich von > 7,5 bis 20 MPa liegt.

15. Baugruppe, die durch das Verfahren nach einem der vorangegangenen Ansprüche hergestellt wird.

## Revendications

1. Procédé de fabrication d'un assemblage comprenant (i) un substrat sélectionné parmi le groupe constitué de DCB (liant de cuivre direct), IMS (substrat métallique isolé), céramique, plastique, matériaux composites, et de métaux en général, (ii) une composition électriquement conductrice durcie et (iii) un composant électronique sélectionné parmi le groupe constitué de diodes, LED, MID (dispositifs d'interconnexion moulés), dés, IGBT (transistors bipolaires à porte isolée), IC (circuits intégrés), capteurs, éléments de connexion, dissipateurs thermiques, résistances, condensateurs, bobines d'induction et antennes, dans lequel la composition électriquement conductrice durcie sert d'adhésif électriquement conducteur et est par conséquent située entre le substrat et le composant électronique,
dans lequel la composition électriquement conductrice est appliquée à la surface de contact d'une partie devant être liée de manière adhésive à une autre,
dans lequel l'autre partie devant être liée de manière adhésive est placée avec sa surface de contact sur la couche d'adhésif électriquement conducteur, dans lequel l'assemblage ainsi formé constitué desdites parties avec la couche de la composition électriquement conductrice entre elles est ensuite durci,
dans lequel la composition électriquement conductrice comprend
(A) 2 à 35 % en vol. de particules électriquement conductrices ayant une taille particulaire moyenne dans la plage de 1 à 25 µm et présentant un rapport de longueur dans la plage de 5 à 30/1,
(B) 10 à 70 % en vol., de préférence 10 à 63 % en vol. de particules non métalliques ayant une taille particulaire moyenne dans la plage de 1 à 25 µm, présentant un rapport de longueur dans la plage de 1 à 3/1,
(C) 30 à 80 % en vol. d'un système de résine durcissable, et
(D) 0 à 10 % en vol. d'au moins un additif,
dans lequel la somme des % en vol. des particules (A) et (B) totalise 25 à 65%envol.

2. Procédé selon la revendication 1, dans lequel la composition électriquement conductrice est constituée de 2 à 35 % en vol. des particules électriquement conductrices (A), 10 à 70 % en vol., de préférence 10 à 63 % en vol. des particules non métalliques (B), 30 à 80 % en vol. du système de résine durcissable (C) et 0 à 10 % en vol. de l'au moins un additif (D).

3. Procédé selon la revendication 1, dans lequel la composition électriquement conductrice comprend 15 à 60 % en poids des particules électriquement conductrices (A), 10 à 75 % en poids des particules non métalliques (B), 7 à 35 % en poids du système de résine durcissable (C) et 0 à 5 % en poids de l'au moins un additif (D), dans lequel la somme des % en poids des particules (A) et (B) totalise 60 à 93 % en poids.

4. Procédé selon la revendication 3, dans lequel la composition électriquement conductrice est constituée de 15 à 60 % en poids des particules électriquement conductrices (A), 10 à 75 % en poids des particules non métalliques (B), 7 à 35 % en poids du système de résine durcissable (C) et 0 à 5 % en poids de l'au moins un additif (D).

5. Procédé selon l'une quelconque des revendications précédentes, dans lequel les particules électriquement conductrices (A) sont des particules métalliques et/ou des particules d'alliage métallique, dans lequel le métal a une conductivité électrique de > 10⁷ S/m.

6. Procédé selon l'une quelconque des revendications précédentes,
dans lequel les particules non métalliques (B) sont des particules de graphite et/ou des particules non métalliques électriquement non conductrices d'un matériau qui a une conductivité électrique de < 10⁻⁵ S/m.

7. Procédé selon l'une quelconque des revendications précédentes,
dans lequel les particules (A) ont une taille particulaire moyenne dans la plage de 0,2 à 2 fois la taille particulaire moyenne des particules (B).

8. Procédé selon l'une quelconque des revendications précédentes,
dans lequel le système de résine durcissable (C) comprend les constituants de la composition électriquement conductrice qui forment après l'application et le durcissement de celle-ci une matrice polymère réticulée par covalence dans laquelle les particules (A) et (B) sont incorporées.

9. Procédé selon l'une quelconque des revendications précédentes,
dans lequel le système de résine durcissable (C) comprend une résine époxy pouvant être autoréticulée ou un système de résine époxy et durcisseur pour la résine époxy sélectionné parmi des durcisseurs de polyamine, durcisseurs d'acide polycarboxylique et durcisseurs d'anhydride d'acide polycarboxylique.

10. Procédé selon la revendication 9,
dans lequel le système de résine durcissable (C) comprend un système de résine époxy, durcisseur de polyamine pour la résine époxy et, en option, lactone.

11. Procédé selon l'une quelconque des revendications précédentes, dans lequel la composition électriquement conductrice a une viscosité dans la plage de 4 à 45 mPa.s, mesurée conformément à DIN 53018 (à 23°C, mesure CSR, système cône-plan, vitesse de cisaillement de 50 tours par seconde).

12. Procédé selon l'une quelconque des revendications précédentes, dans lequel la composition électriquement conductrice durcie est un solide avec un poids spécifique dans la plage de 1,5 à 4 g/cm³.

13. Procédé selon l'une quelconque des revendications précédentes, dans lequel la composition électriquement conductrice durcie présente une résistance de couche de > 0 à ≤ 5 mΩ.cm, mesurée à 25°C.

14. Procédé selon l'une quelconque des revendications précédentes, dans lequel la résistance au cisaillement de la composition électriquement conductrice durcie mesurée à 20°C conformément à DIN EN 1465 se situe dans la plage due > 7,5 à 20 MPa.

15. Assemblage réalisé par le procédé selon l'une quelconque des revendications précédentes.
